# EUROPEAN PATENT APPLICATION

(11) **EP 4 328 685 A1**
(43) Date of publication of application: **28.02.2024**
(21) Application number: 22192435.0
(22) Date of filing: 26.08.2022
(51) Int. Cl.: G05B 19/418, G05B 13/04

(54) **PROCESS MONITORING**

(71) Applicant: Optimal Industrial Technologies Limited, Yate Bristol BS37 5YT (GB)
(72) Inventor: GADSBY, Martin, Bristol, BS37 5YT (GB); SAMUELS, Jonique, Bristol, BS37 5YT (GB)
(74) Representative: Script IP Limited

(57) **Abstract**

Aspects and embodiments relate to a method of monitoring, a monitoring unit (300) configured to perform the monitoring method and a computer program product configured to perform the monitoring method. The method of monitoring is a method of monitoring at least one device configured to perform one or more process (110, 120, 130, 140) to produce a product (200). At least one process is associated with at least one process parameter. The product producible by the one or more process has at least one product quality attribute which is modifiable in dependence upon the at least one process parameter. The method of monitoring comprises: receiving an indication of the at least one process parameter; checking the indication against a calibration model to determine whether the at least one process parameter results in a product quality attribute within a preselected range (650). The calibration model comprises: a mapping between the at least one process parameter and the at least one product quality attribute; the mapping defining: a first range of the at least one process parameter indicative that a product will have a product quality attribute within the preselected range (650); and a second range (1050, 1060) within the first range , the second range of the at least one process parameter being indicative that the at least one process parameter is within an expected range. The method of monitoring further comprising: initiating one or more action if the received indication of the at least one process parameter checked against the calibration model is determined to map to a position inside the first range and outside the second range.

## Description

### FIELD OF THE INVENTION

Aspects and embodiments relate to Process Analytical Technology (PAT) and, more particularly, to a method for use in a PAT system, a computer program product and an apparatus configured to perform that method.

### BACKGROUND

Process Analytical Technology (PAT) approaches are typically systems in which there are measurable critical quality attributes (CQAs) of a product; and in which those critical quality attributes can be mapped or related to critical process parameters (CPPs). The critical process parameters can be mapped or related to one or more characteristic of at least one aspect of a constituent, process and/or equipment used in creation of the product. PAT approaches are such that they allow monitoring of critical process parameters to provide an indication of likely resulting product quality. Such monitoring can support early detection of product quality drift and, in some implementations may enable control or action, whether automated or otherwise, in relation to the constituent(s), processes and/or equipment. Any control or action initiated in response to the monitoring may be based, at least in part, upon the established mapping or relation between one or more CPPs and resulting product critical quality attributes (CQAs).

PAT approaches may be implemented in real time and near real time, may facilitate a detailed understanding of the constituents, processes or operation of the equipment and their impact on critical quality attributes of a resulting product, and, in some implementations, can allow for initiation of control of the process and/or equipment based on real-time product quality data.

Use of PAT approaches can support creation of a product in a manner which results in the product having quality attributes which meet a desired target and may help to reduce unnecessary use of material, energy and/or time.

### SUMMARY

A first aspect provides a method of monitoring at least one device configured to perform one or more process to produce a product, wherein at least one process is associated with at least one monitorable process parameter and wherein the product producible by the one or more process has at least one product quality attribute which is modifiable in dependence upon the at least one process parameter; the method comprising: receiving an indication of the at least one process parameter; checking the indication against a calibration model to determine whether the at least one process parameter results in a product quality attribute within a preselected range; wherein the calibration model comprises: a mapping between the at least one process parameter and the at least one product quality attribute; the mapping defining: a first range of the at least one process parameter indicative that a product will have a product quality attribute within the preselected range; and a second range within the first range, the second range being indicative that the at least one process parameter is within an expected range; and initiating one or more action if the received indication of the at least one process parameter checked against the calibration model is determined to map to a position inside the first range and outside the second range.

In general, a PAT-enabled system for producing a product may comprise: various instrumentation and/or sensors which are configured to determine various process parameters. Those parameters may be considered critical process parameters and may relate to, for example, ingredients, components, steps of a method and/or configuration of process machinery or operating condition for manufacture of a given product. The determination may comprise measurement via one or more sensor. The product may have one or more critical quality attribute of interest. The output of any such instrumentation and/ or sensor forming part of a PAT-enabled system may be fed to an analysis unit. The analysis unit may be configured to determine whether, based on a feed of information provided to the analysis unit, including information from the instrumentation and/or sensors, a resulting product is likely, given an established model between one or more process parameter and one or more resulting product quality attribute, to meet a desired or required resulting product quality.

Some PAT-enabled systems are used to verify that resulting product quality is likely to be as required, by checking that the determination referred to above indicates that the process parameters indicate a mapping to an expected product quality. If such a determination indicates that resulting product quality is likely to be compromised, then an operator may be alerted to a process drift. Such a drift is indicative of a drift in likely product quality away from a product which meets one or more desired product quality attribute. If alerted to a process drift, an operator may be able to take an action to steer one or more of the process parameters as appropriate to try to ensure resulting product quality has a product quality attribute which is likely to fall within the preselected range. In other implementations, a PAT-enabled system may be such that an alert may be raised and steps taken, whether automatically, or manually, to adapt the process such that a product produced meets one or more required quality attribute.

Whilst described in relation to "a product" it will be appreciated that PAT approaches may be applied to interim or intermediate products instead of, or as well as, a final product.

Typical PAT approaches are such that the analysis unit may utilise one or more prediction model comprising a mathematical model used to map, for example, instrumentation readings, for example, one or more sensor reading, to resulting product quality data. The prediction model(s) effectively calibrate one or more indication of a monitorable process parameter to one or more required product quality attributes. Such a prediction model may encompass a mapping of a process parameter, whether alone or in combination with one or more other process parameter, to one or more likely critical quality attribute of a product. Where a range is referred to, it will be appreciated that a range in one or more process parameter may map to an equivalent range of a product quality attribute. That is to say, a predetermined range of a product quality attribute may map to an equivalent range in one or more of the process parameter(s), depending on the relationship set by the prediction model between process parameter(s) and critical quality attribute(s) of a product. Aspects described operate to identify whether the process parameter(s) are such that resulting product quality attribute lies within a normal or desired range. Further assessment is undertaken to determine whether the determined product quality attribute value(s) associated with the process parameter(s) according to the prediction model fall into a cluster within the normal category, and/or which of a set of identified clusters the sampled process parameters can be assigned to.

A typical PAT prediction model is formed based on one or more experiments undertaken, for example, on commissioning of, or in development of, a PAT system in relation to a particular product and process for making that product. Aspects and embodiments recognise that it may be possible to adapt a PAT prediction model once a PAT system has been deployed if data relating to ongoing use of the process to result in the product can be appropriately leveraged. In other words, aspects and embodiments recognise that continuous improvement of a prediction model over time is possible. Whilst deployed, A PAT system is likely to experience process variance and aspects recognise that such variance can be introduced into the calibration models to make them more wide-ranging and robust.

Aspects and embodiments recognise that facilitating continuous improvement of a prediction model can result in a range of potential deliverables in an improved manufacturing process, and may facilitate improved process development processes. By way of example: some aspects and embodiments may facilitate improved process robustness. Some aspects and embodiments may facilitate improved product classification and mapping from process parameters to one or more product quality attribute. Some aspects and embodiments may facilitate early identification of process drift. Some aspects and embodiments may facilitate improved process capability to accept a greater degree of raw material variability. Some aspects and embodiments may facilitate improved quality, or consistency of an intermediate and/or final product. Some aspects and embodiments may facilitate a reduction of manufacturing cost. Some aspects and embodiments may facilitate a reduction of manufacturing time. Some aspects and embodiments may facilitate increased flexibility in relation to processing equipment changes which may be necessary as a result of aging, worn or damaged equipment. Some aspects and embodiments may facilitate increased flexibility in relation to instrumentation, sensor and monitoring equipment changes which may be necessary as a result of aging, worn or damaged equipment. Some aspects and embodiments may facilitate increased flexibility in relation to recalibration as a result of processing or monitoring equipment changes which may be necessary. All aspects and embodiments may facilitate production of a product having a greater overall consistency in relation to one or more desired product quality attribute.

It will be appreciated that continual improvement methods described can be applied repeatedly on, for example, an iterative basis. The iteration may be performed until no significant further improvement appears to be necessary.

In relation to the first aspect, the method may comprise monitoring at least one device configured to perform one or more process to produce a product or intermediate product. In relation to the first aspect, the method may comprise monitoring at least one component, constituent or operating parameter related to production of a product or intermediate product. The method may comprise: a method of monitoring a manufacturing process to produce a product or an intermediate product. The process may comprise a manufacturing process. The manufacturing process may comprise one or more process steps performed by one or more process tools or machines. The method of manufacturing may comprise a method of manufacturing a product from one or more materials or ingredients. The method of manufacturing may comprise manufacture of a product using one or more chemical, biological or physical processes. The processes may be performed in relation to the one or more materials or ingredients. The method of monitoring may relate to any method of manufacturing which can be PAT- enabled. The manufacturing process may comprise a method of manufacture of a pharmaceutical product. The manufacturing process may comprise a method of manufacture of a human or animal consumable or ingestible product. The manufacturing process may comprise a method of manufacture of a household consumable product.

The method of manufacture may be such that at least one process parameter is modifiable, adjustable, or may exhibit variance. The product producible by the one or more process may have at least one product quality attribute which is modifiable, adjustable or which varies, in dependence upon the at least one process parameter. The process parameter may, for example, comprise an inherently measurable characteristic of a constituent or process step, for example: particle size distribution in relation to a particulate ingredient; moisture content or similar; ambient temperature; pressure; humidity or similar. The process parameter may, for example, comprise a variable or modifiable process parameter, for example, a rate of temperature increase, a mixing time, or similar. The process parameter(s) may map in some manner, directly, indirectly or in combination with one or more other process parameter, to a quality attribute of interest of a resulting product. In other words, a critical quality attribute of a product may be related in some way to one or more determinable, monitorable and/or measurable aspect of the process by which the product is manufactured.

The method of monitoring may comprise receiving an indication of the at least one process parameter. The indication may comprise a measurement of the at least one process parameter. The measurement may be performed by an instrument, sensor, probe, or other measurement device. The method of monitoring may comprise: receiving an indication of the at least one process parameter and checking the indication against a calibration model to determine whether one or more resulting product quality attribute falls within a preselected range. In other words, the method may comprise checking that the at least one process parameters indicate, based on the calibration model, that a resulting product is likely to meet a required critical product quality attribute.

The calibration model may comprise: a mapping between the at least one process parameter and the at least one product quality attribute. The mapping may define: a first range of the at least one process parameter indicative that a product will have a product quality attribute within the preselected range. The mapping may further define at least one second range within the first range. The second range of the at least one process parameter may be indicative that the at least one process parameter is within an expected range.

The method may be such that the first range comprises a confidence interval indicative that a resulting product will have a desired product quality attribute.

The method may be such that the second range comprises one or more confidence interval indicative that the at least one process parameter is within an expected range. The method may be such that the second range comprises one or more confidence interval indicative that the at least one process parameter results in a score within an expected range. The score may be calculated based upon the at least one process parameter. The second range may comprise a confidence interval indicative of a score that would fall within a cluster of expected scores.

The monitoring method may be such that it includes initiating one or more action if the received indication of the at least one process parameter checked against the calibration model is determined to map to a position inside the first range and outside the second range.

Action may be initiated if the product quality attribute is inside the first range and outside the second range by a predetermined amount. It will be appreciated that the ranges referred to above represent confidence ranges.

Initiating an appropriate action may allow for steps to be taken in support of creation of an improved calibration model. In addition, or as an alternative, one or more action may be taken to adjust one or more process parameter such that the manufacturing process can result in a product which meets desired product quality criteria. Various actions may be initiated as a result of recognition of a process parameter checked against the calibration model which is determined to map to a position inside the first range and outside the second range. Such a scenario occurs when a score resulting from one or more a process parameter falls outside the one or more cluster represented by the one or more second range, and the score is therefore "unclustered" or an "unclustered inlier". Each action which may be initiated is envisaged as one which has potential to improve robustness of the manufacturing process in relation to ensuring resulting product quality.

The method may be such that the first range comprises a confidence interval indicative that a resulting product will have a desired product quality attribute. Accordingly, the first range is indicative that the process parameter as assessed by the calibration model is likely to result in a product which has an acceptable product quality attribute. Accordingly, a first check made in accordance with the method indicates whether a product which results from the manufacturing process is likely to map to an acceptable critical product quality attribute. In other words, an assessment can be made, based on known process parameters, which is indicative of whether a resulting product will meet required product specifications or critical quality attribute(s).

The method may be such that the second range comprises one or more confidence interval indicative that the at least one process parameter, or score based upon the at least one process parameter, is within an expected range.

Accordingly, the method checks whether the process parameter(s), according to the model, are such that they are within one or more expected range, each expected range representing a cluster of process parameters within a "normal" range. Accordingly, within a range of scores associated with various product parameters which are recognised as resulting in a normal product meeting desired critical quality attributes, it is recognised there may be some normal scores which are "more normal" or expected than others.

The one or more second range, each of which define a cluster of normal, or expected, scores based upon the process parameter(s), may represent different process arrangements which result in a product, or intermediate product, having the desired product quality attribute. For example, if there are two second ranges, each representing a cluster of normal scores, one may represent a group of scores which resulted from a constituent ingredient having, for example, a particular moisture content, and the other may represent a group of scores which resulted from a constituent ingredient change, and in which the moisture content differs.

According to some embodiments, the initiated action comprises: triggering an unclustered inlier alert. The unclustered inlier alert may comprise a visual and/or audio indication. According to some embodiments, the initiated action comprises: triggering sampling of a product resulting from the process. According to some embodiments, the sampling comprises: automated sampling of the product resulting from the process. According to some embodiments, the initiated action comprises: storing at least one process parameter which falls within the first range and outside the second range. Accordingly, recognition of an unclustered inlier (a score within the normal category (first range), but outside an expected cluster (second range) within the normal category) may be utilised to improve the process being monitored in various ways, including triggering an alert to bring attention to the manufacturing process, which may not be operating as might be expected, given the calibration model. Early intervention in a process which may not be operating effectively can result in an ability to adjust the manufacturing process before a resulting product moves out of a state of meeting critical quality attributes. It will be appreciated that various actions may be triggered when an unclustered inlier is detected. An unclustered inlier count may, for example, be maintained and, in the event that a number of unclustered inliers/ data set exceeds a threshold value action may be initiated. Different thresholds may be set in relation to different unclustered inlier detection rates.

According to some embodiments, some or all process parameters which correspond to the triggering of an unclustered inlier, are stored when that unclustered inlier is identified. In some embodiments, the method further comprises: triggering a process drift alert if a number of stored indications or a rate of adding stored indications passes a preselected threshold. According to some embodiments, the method further comprises: triggering an alert relating to a request for recalculation of the calibration model if a number of stored indications passes a preselected threshold. In other words, if there is sufficient data available to support creation of an updated calibration model, the monitoring method may be configured to raise an alert to indicate creation of a new calibration model is possible from an extended dataset. Such a recalculation may occur, provided the process parameters and a product sample associated with those process parameters are obtained, for example, as part of an initiated action. Process parameters and product samples obtained in this way can then be analysed to obtain product quality attributes and the dataset can be added to a dataset used to create a new calibration model.

In some embodiments, the calibration model comprises: an indication of a correlation between a value of the at least one product quality attribute, and multivariate at least one process parameter, resulting in at least one multi-dimensional mapping relating the at least one product quality attribute to a function of at least two principal components, the at least one process parameter comprising a factor in at least one of the principal components. Accordingly, the calibration model may comprise a multivariate calibration model. The calibration model may comprise a multi-dimensional calibration model.

In some embodiments, the function is used to select a range of principal component values which map to the first range indicative that a resulting product will have a desired product quality attribute.

In some embodiments, the function is applied to the received indication of the at least one process parameter to determine whether a resulting product will have a desired product quality attribute.

In some embodiments, at least one multi-dimensional confidence threshold represents the first range indicative that the at least one process parameter is likely to result in a product having a desired product quality attribute.

In some embodiments, the calibration model further comprises: an indication of one or more cluster of principal component values which map to the second range comprising one or more confidence interval indicative that the at least one process parameter is within an expected range.

In some embodiments, the second range comprises a local confidence ellipse representative of a confidence boundary around each cluster.

In some embodiments, the method of monitoring comprises monitoring at least one device configured to perform one or more process step to produce a pharmaceutical product from one or more materials. In some embodiments, the method of monitoring comprises monitoring at least one device configured to perform one or more process step to produce a food product from one or more materials. In some embodiments, the method of monitoring comprises monitoring at least one device configured to perform one or more process step to produce a biological, or chemical product from one or more materials. In some embodiments, the process steps comprise physical, biological or chemical process steps performed on one or more materials or combinations of materials.

A further aspect provides a method of creating a PAT calibration model relating to a manufacturing process, where at least one device is configured to perform a process to produce a product, and wherein at least one process is associated with at least one process parameter and wherein the product producible by the one or more process has at least one product quality attribute which is modifiable in dependence upon the at least one process parameter; the method comprising:
receiving a dataset of process parameters and an associated indication of one or more resulting product quality attribute;
performing an analysis in relation to the dataset to map a relationship between process parameters and at least one resulting product quality attribute;
identifying a first range of product quality attribute scores resulting from the dataset of process parameters which result in a product meeting a required product quality; and analysing a distribution of product quality attribute scores which result in a product meeting a required product quality to identify one or more cluster of scores within those scores; and
determining one or more second range associated with the one or more cluster, indicative that a product quality attribute score within such a second range maps to expected operation of the manufacturing process.

In some embodiments, a set of data resulting from a monitoring method according to the first aspect may be used to iterate or recalculate a PAT calibration model according to the further aspect.

A further aspect provides a computer program product operable, when executed on a computer, to perform the monitoring method of the first aspect.

A further aspect provides a computer program product operable, when executed on a computer, to perform the method of creating a PAT calibration model of the further aspect.

A yet further aspect provides a monitoring unit configurable to monitor at least one device configured to perform one or more process to produce a product, wherein at least one process is associated with at least one monitorable process parameter and wherein the product producible by the one or more process has at least one product quality attribute which is modifiable in dependence upon the at least one process parameter; the monitoring unit comprising: circuitry configured to receive an indication of the at least one process parameter and check that indication against a calibration model to determine whether the at least one process parameter results in a product quality attribute within a preselected range; wherein the calibration model comprises: a mapping between the at least one process parameter and the at least one product quality attribute; the mapping defining a first range of the at least one process parameter indicative that a product will have a product quality attribute within the preselected range; and a second range within the first range, the second range of the at least one process being indicative that the at least one process parameter is within an expected range; the circuitry being configured to initiate one or more action if the received indication of the at least one process parameter checked against the calibration model is determined to map to a position inside the first range and outside the second range.

Further particular and preferred aspects are set out in the accompanying independent and dependent claims. Features of the dependent claims may be combined with features of the independent claims as appropriate, and in combinations other than those explicitly set out in the claims. In particular, features of a described method are implementable as corresponding apparatus or device features.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 is a schematic representation of a PAT system;
Figure 2 is a schematic representation of some stages in development and implementation of a typical Multivariate Statistical Process Control (MSPC) method for a PAT system;
Figure 3 illustrates schematically a scores plot used in a PAT system for assessing a process in real time against a calibration model;
Figure 4 is a schematic representation of a plot of a plurality of samples which are within a normal category;
Figure 5 is a schematic representation of some stages of creation and implementation of a cluster-aware PAT system; and
Figures 6a, 6b and 6c illustrate schematically application of clustering algorithms to samples determined to be within a normal category.

### DESCRIPTION OF THE EMBODIMENTS

Before describing one or more example in detail, a general overview will be provided. As described above, a PAT system 100 generally comprises a process line comprising one or more process equipment and stages, which may be physically or temporally differing stages, 110, 120, 130, 140 which result in a product 200. Various instrumentation and/or sensors 112, 122, 132, 142 are provided and configured to determine one or more process parameters which may, taken alone, or with one or more other process parameters, be considered critical process parameters of a method or of process machinery or operating condition for a given product 200. In some implementations, process equipment may include one or more parameters which may be adjustable or controllable 111, 121, 131, 141 by equipment control unit 400. The equipment control unit may, in some implementations, be in communication with a PAT controller 300.

Instrumentation and sensors 112, 122,132, 142 (and 111, 121, 131, 141 in relation to a direct feed of control information) used in relation to Process Analytical Technology may include relatively simple sensing devices such as temperature probes, humidity sensors and similar and may also make use of one or more spectral instruments configured to monitor a product or process, for example using any appropriate visible and non-visible light technologies including, for example, infra-red, mid infra-red, Raman, UV or visible light spectroscopy. Other technologies including NMR, vibrational sensors, chromatography and similar may be used as an input to a PAT system. It will be appreciated that in terms of monitoring a manufacturing process, various techniques and technologies can be used.

The output from the instrumentation and sensors may comprise a single measurement or may, in the case of the spectroscopy devices, comprise a spectral output: i.e. one reading results in a dataset. By way of example, a spectral dataset may comprise, for example, 500 data points, or more typically, 1,000 data points or more. Each data point may, for example, relates to a response of a system under interrogation by a specific wavelength.

The aim of any successful PAT project is to map one or more specific physical, biological or chemical quality attribute of a product 200 to controllable or monitorable parameters of the system or process used to manufacture that product, or, more particularly, vice versa, such that one or more quality attribute of a product can be assessed as part of monitoring production of the product. The mapping of a product quality attribute of interest to the collected process monitoring data or, more particularly, vice versa, requires that an array of data is analysed and a model is formed which determines a relationship between one or more system or process parameter and one or more quality attribute of the product of interest. It will be appreciated that data in the array may comprise data from a single instrument or may comprise data which is a fusion of data from two or more instruments, spectral and/or univariate. A correlation or mapping may not always exist. In such a case, it may be possible to switch technologies, measurement or monitoring methodology and/or parameters being monitored in order to try and identify a mapping, or it may be clear that the process isn't one which is suited to a PAT approach. PAT-enabled processes for manufacture of a product are those in which appropriate data can be collected and in which a mapping exists between the measurable process parameters and critical product quality attributes for a given product or intermediate product. In other words, PAT processes work in instances where data or data sets can be collected, interpreted to map into product quality attributes using models. Such a determined model or mapped relationship between quality attributes and critical process parameters can be used in various ways including: monitoring the process to ensure resulting product quality is as intended and/or monitoring and using the model or mapped relationship to manipulate product quality attribute(s) to desired values. It may be possible to link a PAT system to a process control unit and adapt a process in dependence upon PAT monitoring and appropriate control or manipulation of critical process parameters.

To determine whether there is a mapping between an instrument output forming all, or part, of one or more system or process parameter and one or more quality attribute of the product of interest, experimentation is undertaken. In order to minimise time and raw material used to establish a mapping, a design of experiments process may occur. Such a process is designed to maximise data gathered from a multivariate process and minimise a required number of experiments to obtain that data. Typically, the number of experiments which are undertaken in such a process is restricted. The data is used to provide calibration models that can be used, but those models may well be far from optimised.

The process of building a calibration model to be used by the PAT controller 300 is such that data, including univariate and spectral data, is gathered at a plurality of temporal test points. Each of those temporal test points corresponds to a resulting product or intermediate product sample which can be analysed in a laboratory. The design of experiments process has an output comprising: a number of data sets each associated with a product sample. The product samples are typically analysed in an analytical laboratory to provide one or more CQA values. By way of example, CQA values may include, for example, a quality indicator such as moisture content, assay, particle size distribution, homogeneity, morphology and/or similar. In the illustrated example, an example of a product quality attribute may be size of resulting star. The CQA values are added to the dataset associated with a product sample.

A subset of the datasets is used to build one or more calibration model(s) to be used by the PAT controller 300. The remainder of the datasets are retained to test and validate calibration model performance.

It can therefore be understood that after the design of experiments process, associated data collection, and assuming that CQAs of interest in relation to the product can be measured, one or more calibration model(s) are created which are suitable for use in a PAT approach.

It will also be understood that the calibration model(s) created as a result of the design of experiments stage will likely be a compromise in terms of overall robustness and the quality of predictions. The compromise in model often occurs as a result of, for example, a compromise in relation to the number of experiments undertaken, which maybe as a result of a limitation of raw material variability or other long or short term variables.

Once properly commissioned, according to the design of experiments process and creation of an appropriate calibration model, a PAT controller 300 may be configured to collect information about the process for creating product 200 whilst the process occurs and, subject to checking the gathered information, determine whether the product which results from the process occurring in real time, is likely to meet one or more desired product quality requirements.

If it is determined, by the PAT controller, that the product resulting from a process is unlikely to meet product quality requirements, a signal may be communicated to the process controller 400, to allow for appropriate action to be taken. The action may comprise stopping the process. The action may comprise human intervention in the process, for example, adjustment of one or more process parameters, to move the product back into a state which is likely to meet the desired product quality attributes.

Barriers to implementation of continuous improvement in a PAT process include: how to identify, in real time, a quality prediction that is acceptable but different to the data which formed the calibration set. Production data of interest is that which is suitably different to any previously gathered data can be difficult. Production does not typically support methods to quickly gather and store all related spectral and univariate data relating to a process in a traceable manner, so recognising cases where it is worth collecting such data could be helpful. Recognition that data relating to process parameters and an associated product may have value to improve a model can be used to trigger acquisition of a product sample associated with a dataset of potential interest so that appropriate analysis can be undertaken to match one or more product CQAto collected process data. Arrangements support ways to gather sufficient data to build a new model and can validate the performance of any such new model.

Described examples recognise that once a process is in production a manufacturer can still gather useful data and the methods described may offer a mechanism to overcome the typical operational difficulties, such as how to capture interesting data of relevance to model improvement, which can be a barrier to a manufacturer leveraging production data to improve the one or more calibration models.

Arrangements described provide a method of monitoring at least one device configured to perform one or more process to produce a product. The at least one process is associated with at least one monitorable process parameter. The product producible by the one or more process has at least one product quality attribute which is modifiable in dependence upon the at least one process parameter. The method of arrangements comprises: receiving an indication of the at least one process parameter and checking the indication against a calibration model to determine whether the at least one process parameter results in a product quality attribute within a preselected range. Accordingly, it is possible to determine whether the product is likely to have the desired product quality attribute. According to arrangements, the calibration model comprises: a mapping between the at least one process parameter and the at least one product quality attribute; the mapping defining: a first range of the at least one process parameter indicative that a product will have a product quality attribute within the preselected range, as described in relation to a standard PAT approach. The mapping further comprises at least one second range within the first range. The second range being indicative that the at least one process parameter is within an expected range.

Accordingly, it becomes possible to compare real time data to the data used to create the mapping and to recognise where the real time data and the data used to create the mapping differs, even when the difference(s) map to a product having a desired product quality attribute. The method allows for recognition of such differences and initiating one or more action if the received indication of the at least one process parameter checked against the calibration model is determined to map to a position inside the first range and outside the second range.

Accordingly, arrangements described can provide a mechanism to identify data sets (and associated product or intermediate product samples) which may be of interest to improve a calibration model. Such improvement may be the provision of a more complete calibration model. According to some arrangements, once many data sets meeting the "inside first range, outside second range" criteria have been gathered and associated samples analysed appropriately in a laboratory to determine CQAs of interest, a full complement of expanded data sets, including those resulting from the design of experiments and the datasets acquired during manufacture can be created. A subset of the expanded datasets can be used to build a new calibration model. Once built, the new calibration model can be tested or validated against the remainder of the expanded datasets and, once fit for purpose, the new calibration model can be used as a replacement for the earlier version. The process of acquisition of further datasets and associated samples can then be repeated, leading to further expanded datasets, and then further calibration models, until no further significant gains are possible.

The benefits to a manufacturer of implementing a continuous improvement method in relation to a PAT enabled system in accordance with described arrangements may include: an ability to manufacture a product using a wider range of raw materials from a wider range of suppliers; thereby potentially saving costs; since a manufacturer may source more widely, the process may become more sustainable; the quality of the product may be improved, or at least more consistent quality may be obtained due to improved quality and reduced quality variance; a manufacturer may reduce give away; it may be possible to reduce manufacturing time; manufacturing efficiency can be further improved, for example, as a result of: reduction or elimination of waste or scrap product; reduction or elimination of reworked product; reduction of energy usage; reduction or removal of product analytical testing and associated costs; an ability to move towards real time product release as a result of holistic quality measurements and prediction quality, no final product testing may be required; the amount of work in progress can be reduced and/or an increased capability to move towards a "just-in-time" method of manufacture.

Having provided a general overview of ways in which PAT processes can be implemented and in which continuous improvement of a PAT-enabled process can be facilitated, a detailed description of some aspects of examples will be provided.

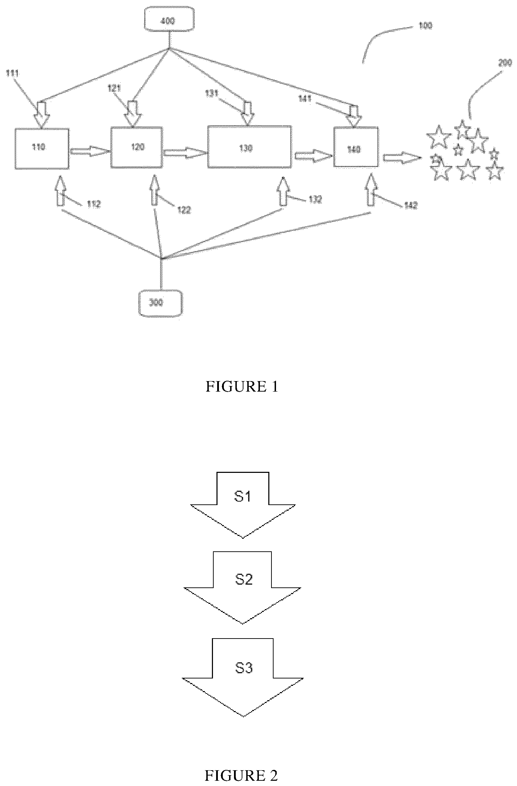

Figure 2 is a schematic representation of some main stages of a Multivariate Statistical Process Control (MSPC) method for a PAT system. In general, the process falls into three stages:

### S1 - Samples

This stage includes collecting data by scanning or analysing process samples and obtaining spectra and univariate data relating to process components/process parameters. By way of example, at this stage collection of scans of calibration samples may be obtained using an instrument, for example, an NIR spectrometer.

### S2 - Model

This stage includes modelling product quality attributes on the basis of the collected data to develop a multivariate calibration model, for example, creation of a calibration model based on Principal Component Analysis (PCA). This stage may include steps to pre-process spectra collected in stage S1 to clean the data and remove any unwanted variation, before then developing the multivariate model using, for example, an MVA package, such as MATLAB. The multivariate model may be formed based on a Principal Components Analysis, for example, two principal components PC1 and PC2. The principal components may each be a function of one or more process parameter. It will be appreciated that any other appropriate Multi Variate Analysis process may be utilised to map a relationship between inputs in the form of process parameters and desired product quality in the form of product quality attributes.

### S3 - Investigate (and Control)

This stage comprises monitoring the process by monitoring the principal components upon which the model is based, recognising when the process may result in products which, according to the calibration model, may not have a desired quality attribute. Some implementations support control of a process in dependence upon recognition that a desired quality attribute may not be met. In particular, a model or relationship determined in stage S2 may support making control decisions based upon a recognition that the desired product quality attribute may not be met and taking steps to improve the process being implemented. The Principal Components (which include one or more process parameters as a factor) identified in the second phase S2, which form the basis for the calibration model, are the axes and scores for monitored process parameters and can be plotted substantially in real-time as the process operates to generate the product, or intermediate product of interest. The plot of scores on the principal component axes allows for an examination of the calibration model output and identification of any outliers or samples which do not meet expectation. The information obtained during real use of a process can be leveraged to, for example, make control decisions including stopping the process; remove any outliers or extreme points; and/or improve the processes.

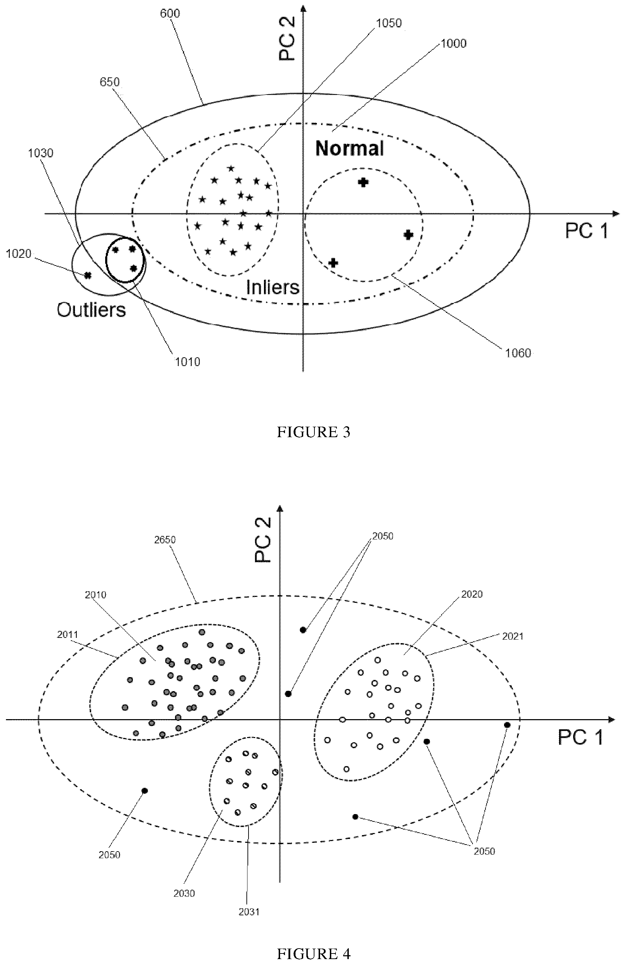

Figure 3 illustrates schematically a mechanism for assessing a process in real time against a calibration model. It will be appreciated that a calibration model which could form the basis of a Multivariate Statistical Process Control (MSPC) method for a PAT system may be multi-dimensional and take into account a plurality of monitored process parameters when mapping those process parameters to a desired product quality attribute. In order to provide a visualisation of the calibration model and a mechanism to assess parameters of the ongoing process against the calibration model, it is possible to provide an indication of Hotelling's T-squared confidence ellipse around a set of "scores" which meet desired product quality attributes, based upon principal components of a multivariate analysis. Figure 3 illustrates schematically Hotelling's T-squared ellipses 600,650, calculated using probability distributions and including confidence limits in relation to a scores plot. Such a representation can allow for monitoring of process parameters in real time in order to determine whether a resulting product is likely, according to the calibration model, to meet one or more product quality attribute of interest.

Samples whose process parameters, when converted to represent the principal components of the model, have scores which fall within confidence ellipse 650 are classed as being "normal" samples 1000. Samples whose process parameters, when converted to represent the principal components of the model, which are such that their plot falls outside the confidence ellipse 650, but within the other ellipse 600 and outside ellipse 650 are marked as "warning" samples 1010, indicating that they represent a slight abnormality, but which are likely to result in a product which still displays the desired quality attribute. Process parameter samples which are such that their plot falls outside ellipse 600are marked as "alert" samples 1020, indicating that they represent a more significant abnormality, which is unlikely to result in a product which displays the desired quality attribute. Samples which fall into the 'warning' and 'alert' categories are both known as "outliers" 1030.

Aspects and embodiments recognise that information gathered during manufacture may provide a mechanism to adapt a calibration model and improve a process used to generate a product. In particular, as seen in Figure 3, within the normal samples 1000, a cluster or grouping of samples 1050 can be seen. In some processes, one or more clusters may be observed within the normal category. The remaining three samples 1060 shown in Figure 3 do not appear to fall into any particular pattern or cluster, and are all within the normal category. Such samples are "unclustered inliers". Unclustered inliers do not fall within the cluster of samples in the normal ellipse, and those unclustered inlier samples appear to be different to those within the cluster and therefore may contain abnormalities or are otherwise unexpected in some respect. It may be that such unclustered inliers actually represent a different cluster within the normal category and that to understand whether that is true, further samples which are within the normal ellipse are required. It may, however, be difficult to identify such samples, since they do not trigger an alert or warning message, they simply sit comfortably within the normal category.

An arrangement recognises that it is possible to use techniques and algorithms which detect clusters and groups within the normal category sample data.

Figure 4 is a schematic representation of a plot of a plurality of samples which are within the normal category. In the example illustrated in Figure 4, there are more samples than the case illustrated in Figure 3, all within the normal category. By eye it is possible to observe that the samples in the normal category 2650 shown in Figure 4 appear to fall into three main clusters 2010, 2020, 2030. It is possible to use a clustering algorithm to mathematically identify and define the clusters. Once the clusters have been mathematically defined, it is possible to assign local Hotelling's T-squared confidence ellipses 2011, 2021, 2031 to each identified cluster. It is then possible, given the available sample points, to note any sample 2050 which is not within a local cluster confidence ellipse, and to assign those samples an "unclustered inlier" label. Unclustered inliers comprise samples which are not extreme, in that they do not trigger a warning or an alert, but they do not represent a typical sample within the normal category. In other words, unclustered inliers represent unusual samples if compared to the samples used to create the calibration model.

It will be appreciated that recognition of unclustered inliers, both within a calibration sample set and within real-time samples, can be leveraged in various ways:
In particular, recognition of unclustered inliers can facilitate functional continuous improvement mechanisms. The recognition of unclustered inliers can help to identify whether a calibration dataset used to create the calibration model is truly representative of a process of interest. If it is believed that a process is fully understood and the calibration model created using an initial calibration dataset is sound, then inlier detection can be used to recognise further aspects of the process and, for example, add one or more further clusters to samples within the normal dataset. In other words, the unclustered inlier points or scores can be added to a calibration dataset. The unclustered inlier detection process can, in effect, be used as an educational tool, to learn more about a process and the types of samples that can be expected. The unclustered inliers can help to identify any initial oversights which may present themselves moving from lab testing and the design of experiments dataset to a production line dataset. Simply recognising the unclustered inliers may allow for verification of such unclsutered inliers as valid sample points that belong to a cluster previously unidentified.

Furthermore, recognition of unclustered inliers can facilitate, in a production line, early identification of process drift. It will be appreciated that unclustered inlier detection provides a mechanism to catch process drift early: If samples are beginning to move out of a cluster of "expected" scores and move towards the edge of a Hotelling's T-squared ellipse encircling such a cluster of expected scores, the movement or drift can be indicative of overall process drift. By using unclustered inlier detection, there may be no need to wait until a sample is out of bounds to be notified of such drift. The drift can be identified early, processes stopped or process parameters adjusted accordingly and the process realigned such that a resulting product remains within a desired product quality attribute target. Such early drift detection can help to reduce any product produced which does not meet required quality targets.

Recognition of unclustered inliers and recognition of cluster membership may also facilitate product classification. Inliers can be used as a way to classify or predict product parameters in real time. By way of example, unclustered inlier detection may offer a means to predict percentage concentration of an active pharmaceutical ingredient (API) in a resulting product. Alternatively, if a process had a time-based trend or batch process, it may be possible to use clustering to track that trend or batch process and give an indication of position within the life cycle of a process, depending on which cluster a sample or set of samples belongs to. The cluster identification and membership in terms of samples may allow a manufacturer to drive a process through a given path to a more desirable region of an acceptance range. The cluster information can be used to adjust processes in real-time to get sample scores into, or out of, a specific cluster or area of the normal plot.

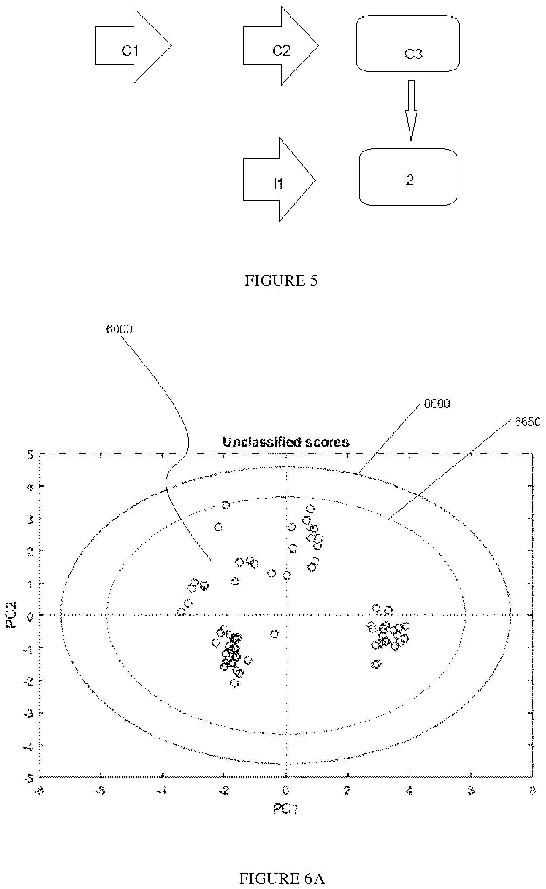

Figure 5 is a schematic representation of some main stages of creation and implementation of a cluster-aware PAT system. In general, the creation process falls into three stages:
Stage C1 - A calibration dataset is obtained, for example by means of a design of experiments process as described above. The calibration dataset comprises a set of data which is considered to be representative of the process of interest.
Stage C2 - A usual process mapping input data to desired process output (for example, one or more product quality attribute) is performed, and a "normal" ellipse defined. Within that normal ellipse, the calibration dataset is analysed with a clustering algorithm configured to assign each of the normal calibration points in the normal set to a cluster. In other words, at stage C2, clusters are identified.
Stage C3 - In relation to each expected cluster identified in stage C2, local confidence ellipses based on Hotelling's T-squared method are calculated. As a result, a confidence boundary around each cluster can be established.

Thereafter the implementation process falls into two main stages:
Stage 11 - During use of the process, process parameters are monitored, and an analysis can be undertaken to identify whether the process parameters are such that resulting product quality lies within a normal or desired threshold. If the process parameters result, according to the model, in a product which has a desired critical product quality attribute which lies within the normal category a further assessment can be undertaken to determine whether the determined product quality attribute values fall into a cluster within that normal category, and/or which of a set of identified clusters the sampled process parameters can be assigned to.
Stage 12 - Using local cluster confidence limits (determined at stage C3) it is possible to check whether a sample lies within a cluster boundary. If so, the sample is determined to be within that cluster. If the sample is not determined to be within a cluster boundary, the sample can be categorised or further labelled as a sample within the normal category, but outside a known cluster, in other words, an "unclustered inlier". One or more action may flow from such an identification. The appropriate action may, for example, comprise saving the process parameters relating to that unclustered inlier as a potential new addition to a next generation of calibration data; an action may comprise storing the parameters and raising an alert to capture a product sample corresponding to and resulting from, the process having such process parameters; the action may comprise automatically collecting a product sample; the action may comprise an adjustment to one or more process parameters; the action may comprise raising an alert of process drift, for example, if a threshold number of unclustered inlier values having similar characteristics is recorded. It will be appreciated that various implementations of warnings and alerts may be performed as appropriate in relation to a given PAT-enabled process. By way of example, it is possible to implement an "x unclustered inliers within y samples" rule to trigger a "warning" or an "alert" according to different thresholds. The relevant thresholds could be decided by an expert process engineer designing the system.

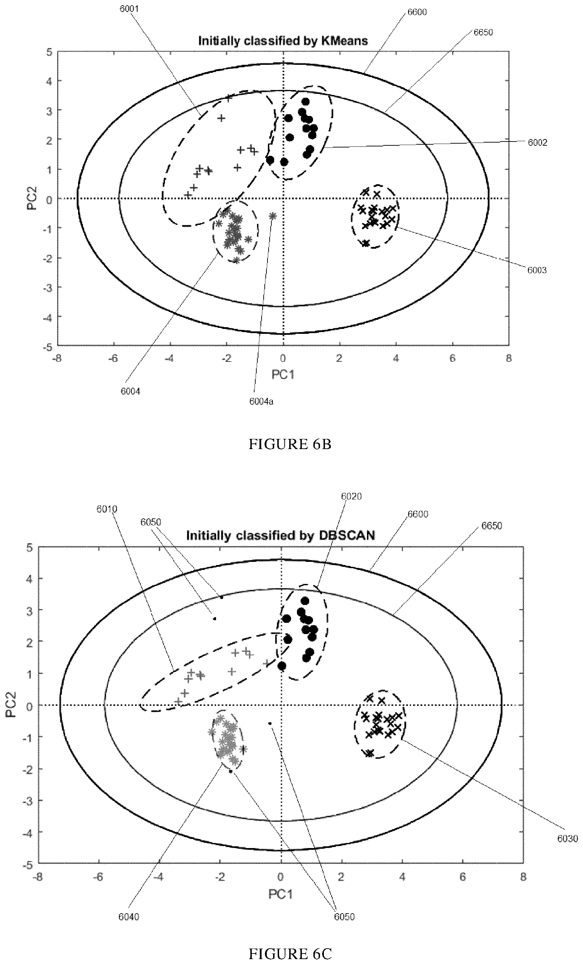

Figures 6a, 6b and 6c illustrate schematically application of clustering algorithms to samples determined to be within a normal category. Figure 6a illustrates schematically a calibration dataset 6000, plotted within the normal category 6650 and appropriate probability ellipses 6600, 6650. In relation to the illustrated dataset 6000, there are four clusters. The number of clusters may be determined as a result of knowing there were 4 different types of sample, for example. It is possible to implement various clustering algorithms to allow for successful operation of a PAT system employing clustering techniques to facilitate continuous improvement.

Figure 6b illustrates application of a K-means type algorithm to the clustering problem. According to such an approach, a parameter 'K' representing a total number of clusters likely in the data is selected. In this case illustrated in Figure 6 there are 4 groups or clusters. Local ellipses 6001, 6002, 6003, 6004 are defined around each of the clusters or groups of sample scores. The K-means algorithm operates to assign every single point (sample score) to a cluster. As a result, the K-means algorithm approach has particular applicability in the event that all samples are valid. As shown in Figure 6b, application of a K-means membership to the data of Figure 6 illustrates that there may be a score 6004a in the calibration dataset which is outside the confidence ellipses of the clusters, but that score may nonetheless be "assigned" or attributed to a cluster. The unclustered inlier criterion (the second range) may then be determined based on whether a sample lies within or outside any one of the confidence ellipses associated with the determined clusters resulting from the clustering process.

Figure 6c illustrates application of a DB SCAN type algorithm to the clustering problem. A DB SCAN type algorithm requires less upfront knowledge about the calibration data to identify clusters in the calibration data. In particular, it will operate without knowledge of an exact number of groups which may be expected. The DBSCAN algorithm is operable to automatically detect a number of clusters, in this case the algorithm detects four distinct clusters and assigns confidence ellipses 6010, 6020, 6030 and 6040 and also identifies potential unclustered inliers 6050 within the calibration data itself. The identification of unclustered inliers adds an extra layer of filtering in relation to the calibration data. In this instance, various scores (shown as dots 6050 in Figure 6c) are disregarded in relation to the determination of clusters within the normal dataset.

Having described the process and continuous improvement methodology in concept, a set of particular possible applications are described to facilitate understanding of the range of possible applications.

### Example One - Formula Milk

Many attributes of baby formula milk are important in relation to a manufacturer, regulatory bodies and end users.

Atypical manufacturing process for baby formula milk involves the steps of 1) mixing ingredients, 2) pasteurization, 3) homogenization and 4) standardization. The process begins with mixing primary ingredients in stainless steel tanks. Skim milk is added and heated to 60°C. Fats, oils and emulsifiers are added thereafter. Minerals, vitamins, and stabilizing gums may be added at various points in the process depending on their sensitivity to heat. Once mixing is complete, the batch can be temporarily stored or transported via pipeline to pasteurization equipment.

Pasteurization involves quickly heating and cooling the product under controlled conditions which microorganisms cannot survive. A temperature of 85-94° C, held for about 30 seconds, is necessary to adequately reduce microorganisms and prepare the formula for filling. Several pasteurization methods are commercially available-one common method warms the formula by sending it through a tube adjacent to heat plate heat exchanger. Thus the formula is heated indirectly. Another method heats formula directly and then uses the heated liquid to preheat the rest of the incoming formula. The preheated formula is further heated with steam or hot water to the pasteurization temperature. After pasteurization is complete, the batch may be processed further by homogenization. Homogenization can be done with a variety of mixing equipment, which applies high shear to the product. This type of mixing breaks the fat and oil particles into very small droplets. The resulting composition is standardized to ensure key quality attributes, such as pH, fat concentration, and vitamin and mineral are correct. If any of these materials are at insufficient levels the batch can be reworked to achieve the appropriate levels. The batch is then ready to be packaged. More details can be found on website http://www.madehow.com/Volume-4/Baby-Formula.html which has partially been reproduced here.

This manufacturing process involves a multitude of process parameters ranging from amounts of ingredient additions, mixing speed and times, heating profiles, pressure levels and further parameters. When establishing a model all these parameters are correlated with quality attributes that are within a desired range.

One typical ingredient which forms the basis for a process resulting in formula is skim milk. Skim milk is a natural product and inevitably there are variations that occur. Such variations may occur for example as a result of differences: cow to cow; herd to herd; area to area (quality of grazing) and season to season (quality of grazing). Such differences may be expected to map to different clusters.

Typical PAT processes may be such that an initial calibration model(s) for a chosen set of instruments and a given production process cannot take into account many of these variables. Depending on the scope of an initial design of experiments, some raw material variation may well be modelled but certainly much of the variation is likely to be missed, for example, seasonal variation. As a result, the initial calibration model(s) will likely only perform well in relation to formula produced using raw materials that fall into a narrow sub-set of all potential variations. By way of example, the calibration data may all be obtained during a single season and the PAT model built upon that data. It may be expected that as the process is used through the seasons, there may be variation in the raw material attributable to seasonal change(s). An improved PAT model would take into account such variation. Arrangements recognise that it is possible to determine whether such supposition of seasonal variation manifests in practice, and, for example, may allow for action to be taken if such seasonal variation does manifest. In particular, recognition of unclustered inliers may support capture of appropriate information to allow for creation of an improved PAT model.

Application of the clustering and inlier techniques described above may support creation of an improved model. The described techniques recognise that once a formula manufacturing process has been in production for a period of time and many batches of formula produced, long term and short-term variations which result from the raw milk variation are likely to have occurred. Use of the techniques described enable a mechanism to capture data relating to previously unmodelled variables. Formula batches can be sampled for analytical testing where inliers have been detected and an enhanced model created. With the enhanced model(s), it becomes possible to improve reliability of predictions of product quality attributes resulting from a given raw milk input can be improved, and it is likely that implementation of PAT processes using such improved models can directly result in improved product consistency, product reliability, production efficiency, reduced raw material waste and a reduction in product waste.

### Example Two - Pharmaceutical Tablet (Oral Solid Dose)

Many attributes of oral solid dose pharmaceuticals are important in relation to parties including: a manufacturers, regulatory bodies and end users. Such attributes can be product- specific, but some generic examples of critical quality attributes include: moisture content; morphology; weight; percentage drug loading; content uniformity; thickness; hardness; and brittleness.

It will be appreciated that a typical pharmaceutical tablet is made of several raw materials, including, for example, single layers or coatings. The number of raw materials involved in a pharmaceutical production process is likely to increase with increasing tablet layers. Some raw materials may be natural, and subject to natural variation. Those raw materials or ingredients which are not naturally occurring typically comprise materials which are themselves manufactured prior to being further processed into a tablet. A manufactured ingredient will typically have to meet a specific standard, however, even within those manufactured ingredients there may be variation in for example: moisture content; morphology; particle size distribution; bulk density and active pharmaceutical ingredient loading. It will be appreciated that there can also be intermediate product variations which may include all of the above, plus in-flight blend uniformity.

As with all processes, pharmaceutical manufacturing equipment may deteriorate over time which can have an impact upon manufacturing performance.

Depending on the scope of the design of experiments used in relation to creation of the initial model, some of the likely material and process variation can be well modelled but inevitably much of the expected variation will not be modelled. As a result, the initial calibration model(s) will likely only perform well on product produced within a narrow sub-set of the potential variations and the model is certainly unlikely to take into account machinery variations, or raw material variability.

Application of the clustering and inlier techniques described above can support creation of an improved model to use in a PAT enabled product manufacturing process. The described techniques recognise that once a pharmaceutical tablet process has been in production for a period of time and many batches of tablets produced, long term and short term variations which result from the ingredient, process and machinery variations are likely to have occurred. In other words, during production variations will have been seen in each raw material, including variation from a single supplier for each material and variation seen when multi-sourcing raw materials. Processing variations may have occurred due to equipment changes or any change in machinery parts introducing unexpected effects.

The techniques described herein relating to identification of clusters of normal data within a normal set of data and the detection of production data which can be categorised as "inliers" facilitate improved modelling and enable capture of data of relevance to previously unmodelled variables and therefore creation of an enhanced process model. With the enhanced model(s), not only will the reliability of predictions be improved but also the quality and variability of quality of a final product. Improved modelling can support an improvement in production efficiency, a reduction in material and product waste, and improved business sustainability, for example, as a result of an ability to accommodate changes in raw material supply or to swap material supplier.

### Example Three - Foodstuffs

Food and beverages are generally manufactured from a number of naturally occurring raw materials and a number of manmade materials. The material components or ingredients used to create the foodstuff product may themselves be made from processed natural materials, else synthesised. Each ingredient will be subject to variation: the man-made materials will have variations from lot to lot and further variation from manufacturer to manufacturer. Natural products will have significant variations: variations from within a single supplier, variations due to the location that the material was grown, variations due to product handling and, for example, seasonal variation. Each material is likely to have to meet a particular material specification before introduction into a manufacturing process, but it is not unusual for this to have significant scope for variability. It will therefore be appreciated that if a foodstuff manufacturer changes material supplier then a step change in product quality attributes is likely to occur. There are a virtually limitless number of raw material parameters that can vary, and examples include: water content; fat content; protein content; acidity; colour; mineral content; sugar content; solids content; and particle size distribution.

Normally a finished, processed foodstuff has to adhere to a specific quality standard or requirement to meet brand quality levels and consumer expectations. By way of example, some foodstuffs may require a minimum declared level of one or more key ingredient. If such key ingredients are expensive then efforts are made by a manufacturer to get as close as possible to the declared minimum level without going below it. It will be appreciated that the significant variation in raw material can result in production of product which does not meet requirements. The non-conforming product will typically go to scrap else rework.

If PAT-enabled processes which give real time quality assurance is introduced to a foodstuff manufacturing process, for example, in place of the human reliant control, then the quality and consistency of quality can be improved, waste reduced and the amount of giveaway significantly reduced. However, a PAT enabled system for manufacture of a foodstuff relies on a model mapping relationships between process parameters and critical product quality attributes.

When such a model is initially created it will typically only take into account data acquired in relation to a small sub-set of the potential variability that will be encountered during the manufacturing life of the product, and so unless the calibration model is improved as manufacture progresses then the PAT enabled manufacturing process is likely to quickly start to underperform and perhaps give incorrect predictions. An ability, once manufacturing has commenced, to identify and capture quality predictions that may still result in an acceptable product but which represent likely variations or abnormalities in critical process parameters can be of significant value. The triggering of an "inlier" or abnormality is likely due to a calibration model being presented with data sets that do not conform to those upon which the model was created. By using the continuous improvement tools described above abnormal events such as those described can be captured, and the calibration model(s) systematically improved over an increasing number of production batches so that more and more raw material, and indeed processing equipment, variations have been modelled. The resulting enhanced calibration models, created with the extended data sets, represent more robust more accurate predictions and will operate reliably with significant input variations, thus resulting in significant quality, production and financial improvements.

### Example Four - Fast Moving Consumer Goods (FMCG)

FMCG products may take various forms. Many of the goods sold in supermarkets that are not foodstuffs can be termed FMCG. These are generally manufactured from a number of previously processed chemicals that form the raw materials, together with some naturally occurring raw materials. Each of the materials will have variation: the natural material being subject to usual variations and the manmade materials being similarly variable in addition to having variations lot to lot and manufacturer to manufacturer. There are a virtually limitless number of raw material parameters that can vary, examples including: water/solvent content; percentage of suspended solids; size distribution of powders or suspended solids; required chemical purity; impurities - both number of and level; morphology; pH; and fatty acid content.

Normally a finished, processed FMCG has to adhere to a specific quality standard or requirement to meet brand quality levels and consumer expectations. By way of example, some goods may require a minimum declared level of one or more key ingredient. If such key ingredients are expensive then efforts are made by a manufacturer to get as close as possible to the declared minimum level without going below it. It will be appreciated that the significant variation in raw material can result in production of product which does not meet requirements. The non-conforming product will typically go to scrap else rework.

If PAT-enabled processes which give real time quality assurance are introduced to a FMCG manufacturing process, for example, then the quality and consistency of product can be improved, waste reduced and the amount of giveaway significantly reduced. However, a PAT enabled system for manufacture of a FMCG relies on a model mapping relationships between critical process parameters to critical product quality attributes.

When such a model is initially created it will typically only take into account data acquired in relation to a small sub-set of the potential variability that will be encountered during the manufacturing life of the product, and so unless the calibration model is improved as manufacture progresses then the PAT enabled manufacturing process is likely to quickly start to underperform and perhaps give incorrect predictions. An ability, once manufacturing has commenced, to identify and capture quality predictions that may still result in an acceptable product but which represent likely variations or abnormalities in critical process parameters can be of significant value. The triggering of an "inlier" or abnormality is likely due to a calibration model being presented with data sets that do not conform to those upon which the model was created. By using the continuous improvement tools described above abnormal events such as those described can be captured, and the calibration model(s) systematically improved over an increasing number of production batches so that more and more raw material, and indeed processing equipment, variations have been modelled. The resulting enhanced calibration models, created with the extended data sets, represent more robust more accurate predictions and will operate reliably with significant input variations, thus resulting in significant quality, production and financial improvements.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

## Claims

1. A method of monitoring at least one device configured to perform one or more process (110, 120, 130, 140) to produce a product (200), wherein at least one process is associated with at least one monitorable process parameter and wherein the product producible by the one or more process has at least one product quality attribute which is modifiable in dependence upon the at least one process parameter;
the method comprising:
receiving an indication of the at least one process parameter;
checking the indication against a calibration model to determine whether the at least one process parameter results in a product quality attribute within a preselected range (650);
wherein the calibration model comprises: a mapping between the at least one process parameter and the at least one product quality attribute; the mapping defining:
a first range of the at least one process parameter indicative that a product will have a product quality attribute within the preselected range (650); and
at second range within the first range, the second range (1050, 1060) being indicative that the at least one process parameter is within an expected range;
and initiating one or more action if the received indication of the at least one process parameter checked against the calibration model is determined to map to a position inside the first range and outside the second range.

2. A method according to claim 1, wherein the first range comprises a confidence interval indicative that a resulting product will have a desired product quality attribute.

3. A method according to claim 1 or claim 2, wherein the second range comprises one or more confidence interval indicative that the at least one process parameter is within an expected range.

4. A method according to any preceding claim wherein the initiated action comprises: triggering an inlier alert

5. A method according to any preceding claim, wherein the initiated action comprises: triggering sampling of a product resulting from the process and optionally wherein the sampling comprises: automated sampling of the product resulting from the process.

6. A method according to any preceding claim, wherein the initiated action comprises: storing the at least one process parameter which falls within the first range and outside the second range.

7. A method according to claim 6, wherein the method further comprises: triggering a process drift alert if a number of stored at least one process parameter passes a preselected threshold.

8. A method according to claim 6, wherein the method further comprises: triggering recalculation of the calibration model if a number of stored at least one process parameter passes a preselected threshold.

9. A method according to any preceding claim, wherein the calibration model comprises: an indication of a correlation between a value of the at least one product quality attribute, and multivariate at least one process parameter, resulting in at least one multi-dimensional mapping relating the at least one product quality attribute to a function of at least two principal components, the at least one process parameter comprising a factor in at least one of the principal components.

10. A method according to claim 9, wherein the function is used to select a range of principal component values which map to the first range indicative that a resulting product will have a desired product quality attribute.

11. A method according to claim 9 or claim 10, wherein the function is applied to the received indication of the at least one process parameter to determine whether a resulting product will have a desired product quality attribute.

12. A method according to any one of claims 9 to 11, wherein the calibration model further comprises: an indication of one or more cluster of principal component values which map to the second range comprising one or more confidence interval indicative that the at least one process parameter is within an expected range

13. A method according to claim 12, wherein the second range comprises a local confidence ellipse representative of a confidence boundary around each cluster.

14. A computer program product operable, when executed on a computer to perform the method of any one of claims 1 to 13.

15. A monitoring unit (300) configurable to monitor:
at least one device configured to perform one or more process (110, 120, 130, 140) to produce a product (200), wherein at least one process is associated with at least one monitorable process parameter and wherein the product producible by the one or more process has at least one product quality attribute which is modifiable in dependence upon the at least one process parameter;
the monitoring unit comprising:
circuitry configured to receive an indication of the at least one process parameter and check that indication against a calibration model to determine whether the at least one process parameter results in a product quality attribute within a preselected range (650);
wherein the calibration model comprises: a mapping between the at least one process parameter and the at least one product quality attribute; the mapping defining a first range of the at least one process parameter indicative that a product will have a product quality attribute within the preselected range (650); and a second range (1050, 1060) within the first range, the second range being indicative that the at least one process parameter is within an expected range;
the circuitry being configured to initiate one or more action if the received indication of the at least one process parameter checked against the calibration model is determined to map to a position inside the first range and outside the second range.
